# EUROPEAN PATENT APPLICATION

(11) **EP 4 844 725 A1**
(43) Date of publication of application: **25.11.2026**
(21) Application number: 25178059.9
(22) Date of filing: 21.05.2025
(51) Int. Cl.: G08G 1/00

(54) **COMMUNICATION DEVICE AND METHOD FOR COMMUNICATION**

(71) Applicant: Valeo Comfort and Driving Assistance, 94000 Créteil (FR)
(72) Inventor: ENGELHARDT, Tobias, 94000 Créteil (FR); STAEDTLER, Lea, 94000 Créteil (FR)
(74) Representative: Delaval, Guillaume Laurent

(57) **Abstract**

The invention relates to a communication device for an first automotive vehicle (1) travelling in a convoy (3) with a second automotive vehicle (2), comprising a wireless communication interface (9) and configured to :
- detect a predefined event;
- select at least a predefined message corresponding to the detected event;
- display the predefined message on a human-machine interface (6) of the first vehicle in order for a driver of the first vehicle to confirm or disregard refuse the transmission of the message;
- if the transmission of the message is confirmed by the driver of the first vehicle, transmit the message to the second vehicle via the wireless communication interface.

It is also provided a corresponding method.

## Description

### TECHNICAL FIELD OF THE INVENTION

The invention relates to the field of telecommunication, and more precisely to the field of telecommunication between automotive vehicles.

More precisely the invention relates to a communication device and to a method for communication between at least two vehicles.

### BACKGROUND INFORMATION AND PRIOR ART

When several vehicles travel together (in a convoy), they may encounter difficulties in maintaining coordination. These difficulties may result from the unpredictable driving conditions, for instance the presence and behavior of other vehicles on the road, navigating traffic signals, obstacles on the road, mechanical issues and miscomprehension of the intention of other vehicles of the convoy. These difficulties may lead to the dispersal of the convoy, which may be a problem if some of the vehicles of the convoy are following the other without knowing the route.

The occupants of the vehicles may communicate with their phone, but such solutions may be dangerous if the driver is alone in the vehicle and if the vehicles are not equipped with ergonomic free hand calling systems. Furthermore, it may be difficult and inconvenient to explain a situation by phone. Also, when the convoy comprises more than two vehicles, this solution appears very limited.

### SUMMARY OF THE INVENTION

Therefore, one object of the invention is to provide a solution to the above-mentioned technical problem.

According to an aspect, it is provided a communication device for an first automotive vehicle travelling in a convoy with at least a second automotive vehicle, comprising a wireless communication interface and configured to:
- detect a predefined event based on a signal from a sensor of the first vehicle or based on location data of the first vehicle or based on data received from the wireless communication interface;
- select at least a predefined message corresponding to the detected event;
- display the predefined message on a human-machine interface of the first vehicle in order for a driver of the first vehicle to confirm or refuse the transmission of the message;
- if the transmission of the message is confirmed by the driver of the first vehicle, transmit the message to the second vehicle via the wireless communication interface.

Thanks to the invention, part of the process of transmitting a message to other vehicles of the convoy is automated. As a result, drivers can communicate with each other more quickly and ergonomically, and the information exchanged is more relevant. This makes it easier to maintain the convoy.

According to an embodiment, the communication device is configured to, after the detection of the predefined event, select a plurality of predefined messages corresponding to the detected event, display the plurality of predefined messages on the human machine interface of the first vehicle in order for the driver to select one message of the plurality of messages, and transmit the selected message to the second vehicle via the wireless communication interface.

According to an embodiment, the predetermined event is chosen among the following events:
- the distance between the first vehicle and the second vehicle exceeds a predetermined threshold;
- the relative position of the first vehicle and the second vehicle along the road changes;
- a message is received from the second vehicle;
- a global navigation satellite system of the first vehicle detects an alternative route for the first vehicle;
- an accident is detected;
- an obstacle is detected on the road;
- a technical issue in the first vehicle is detected.

According to an embodiment, the wireless communication interface is configured to implement vehicle-to-everything communications or cellular communications.

According to an embodiment, the communication device comprises a telematic control unit.

According to an embodiment, the communication device is configured to, the first vehicle travelling in convoy with a third vehicle, determine the relevance of transmitting the message to the third vehicle and, depending on the result of the determination, to transmit or not transmit the message to the third vehicle.

According to an embodiment, the determination of the relevance is based on the relative positions of the first vehicle and the third vehicle.

According to an embodiment, the communication device is configured to display, on command from the driver of the first vehicle, a pre-determined list of messages on the human-machine interface of the first vehicle, to allow the driver of the first vehicle to select a message, and to transmit the selected message to the second vehicle.

According to another aspect, it is provided a method for communication between a first vehicle and at least a second vehicle travelling in convoy, comprising:
- a step of detecting a predefined event based on a signal from a sensor of the first vehicle or based on location data of the first vehicle or based on data received from the wireless communication interface;
- a step of selecting a predefined message corresponding to the detected event;
- a step of displaying the predefined message on a human-machine interface of the first vehicle in order for a driver of the first vehicle to confirm or disregard the message;
- if the message is confirmed by the driver, a step of transmitting the message to the second vehicle via the wireless communication interface.

According to an embodiment, the method comprises a step of displaying said message on a human-machine interface of the second vehicle, said message comprising an option to be selected by a driver of the at least one second vehicle.

It should be noted that the invention applies to a convoy comprising any number of vehicles, for instance more than three vehicles. In any case, any vehicle of the convoy (equipped with a communication device according to the invention) may act as the first vehicle or as the second vehicle.

### DETAILED DESCRIPTION OF EXAMPLE(S)

The following description with reference to the accompanying drawings will make it clear what the invention consists of and how it can be achieved. The invention is not limited to the embodiment illustrated in the drawings. Accordingly, it should be understood that, where features mentioned in the claims are followed by reference signs, such signs are included solely for the purpose of enhancing the intelligibility of the claims and are in no way limiting on the scope of the claims. In the accompanying drawings:
- Figure 1 shows a convoy of automotive vehicles equipped with a communication device according to an embodiment of the invention;
- Figure 2 shows a method according to an embodiment of the invention.

A first automotive vehicle 1 driven by a first driver and a second automotive vehicle 2 driven by a second driver, here cars, are travelling together on a same road RD, and are part of a convoy 3 (or platoon). The first automotive vehicle 1 is equipped with a first communication device 4 according to an embodiment of the invention and the second automotive vehicle 2 is equipped with a second communication device 5 according to an embodiment of the invention. Here, both the first communication device 4 and the second communication device 5 comprises a telematic control unit (TCU).

Here, the first communication device 4 is connected to an on-board network of the first automotive vehicle 1. An on-board network of an automotive vehicle is defined here as all the interconnected electronic systems used to manage, control and exchange information between the different functional units of the vehicle, such as sensors, actuators and electronic control units (ECUs).

The first communication device 4 is therefore configured to receive data from the on-board network, for instance signal from the sensors and location data from a Global Navigation Satellite System (GNSS), and to transmit data to the on-board network, for instance to a human-machine interface of the first vehicle 1.

Here, the on-board network of the first vehicle 1 comprises an infotainment system comprising a first human-machine interface 6 that allows the first driver to interact with the first communication device 4. In this embodiment, the first human-machine interface 6 comprises a touch screen. For instance, the infotainment system hosts a dedicated computer application, accessible from the first human-machine interface 6 and configured to provide a command interface for the first communication device 4.

The first communication device 4 comprises a first memory 7 and a first electronic control unit 8 configured to control the operations of the first communication device 4. The first electronic control unit 8 comprises for instance a processing unit, memory modules, input/output ports for communication with the on-board network and the wireless communication interface (described below).

The first communication device 4 comprises a first wireless communication interface 9 configured to transmit and receive data through wireless channels, i.e. radiocommunication channels. For instance, the first wireless telecommunication interface 9 comprises a cellular interface module to establish a communication channel with a cellular network CN, and a short-range interface module to establish a Dedicated Short-Range Communication (DSRC, as defined by the standard IEEE 802.11p). The first wireless communication interface 8 is thus configured to perform cellular communication and vehicle-to-everything (V2X) communications.

In this example, the second communication device 5 is identical to the first communication device 4. The second communication device 5 therefore comprises a second memory 10, a second electronic control unit 11, and a second wireless communication interface 12 which comprises a cellular interface module and a short-range interface module (not shown). The second communication device 5 is configured to be connected to an on-board network of the second vehicle 2. The second vehicle 2 is equipped with a second human-machine interface 13 that allows the driver to interact with the second communication device 5.

The first communication device 4 and the second communication device 5 are configured to communicate with each other. They are configured to establish a cellular communication channel C1 through the cellular network, and to establish a short-range communication through a DSRC channel C2.

In order to facilitate the travelling of the two vehicles 1, 2 in convoy, the first communication device 4, and also here the second communication device 5, are configured to implement a communication method according to one embodiment of the invention.

The communication devices 4, 5 host, for example in the memories 7, 10, a computer program which, when executed, for example by a computer processing unit of the communication device 4, 5, leads to the implementation of said method.

In this example, from the communication devices 4, 5 points of view, the convoy 3 comprises all the vehicles for which an identifier has been stored in a list in the memories 7, 10. For instance, the identifier may be attributed to the vehicle by the dedicated application.

For instance, the driver of the first vehicle 1 may select an identifier of the second vehicle 2 through the first human machine interface 6 in order to add it to the convoy 3. The second driver then receives a notification that it has been added to the convoy 3. At the reception of the notification, the second driver may confirm or refuse to be added to the convoy 3.

Here, the first vehicle 1 and the second vehicle 2 are equipped with identical communication devices 4, 5. Consequently, they may both implement the same method. Therefore, it should be understood that, although the following description is centered on the first vehicle 1, it may apply reciprocally to the second vehicle 2 (in other word, in the following description, the roles of the first vehicle 1 and the second vehicle 2 may be inverted).

The first communication device 4 is configured to, when detecting a predefined event, provide information or suggestions to other drivers in relation with the event, in order to help the other vehicles of the convoy 3 to stay close to each other or to enhance the driving experience and comfort of the drivers.

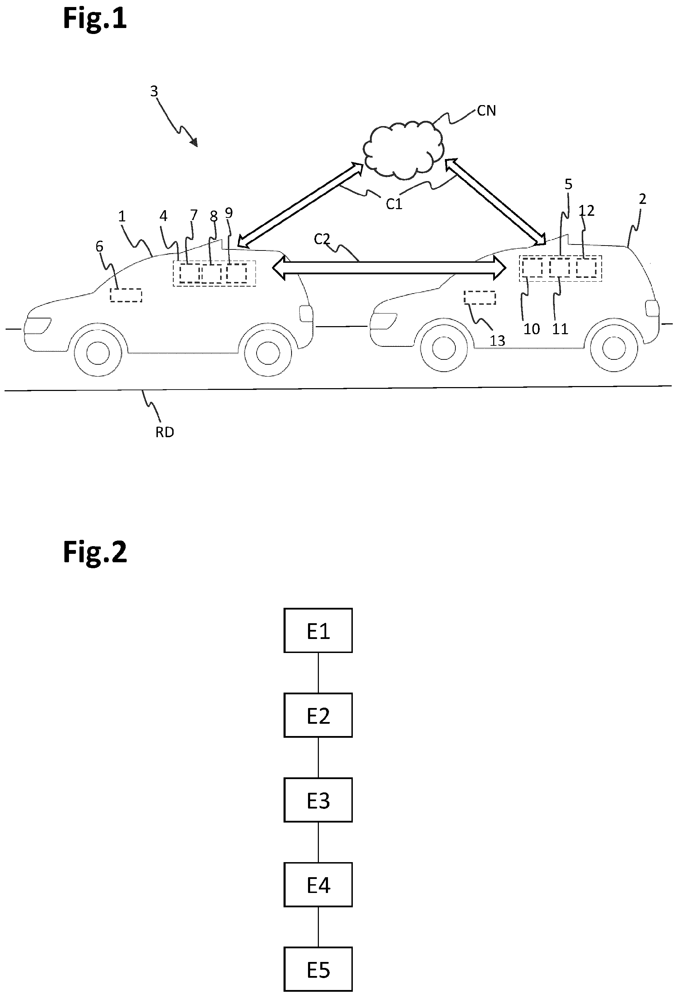

As shown in Figure 2, in a first step E1 of the method, the first communication device 4 (of Figure 1) is configured to detect the predefined event. The detection of the predefined event is based on a signal received from one or several sensors of the first vehicle 1, based on location data, i.e. data provided by the global navigation satellite system of the first vehicle 1, and/or from a signal received by the first wireless communication interface 9.

For instance, said sensors are configured to detect external events (outside the vehicle, for instance on the road), or internal events (inside the vehicle, for instance in the cabin, in the motor or in the on-board network).

In a second step E2 of the method, the first communication device 4 selects a predefined message corresponding to the detected event. For instance, the first memory 7 comprises a look-up table which associates one or several messages to each event.

In a third step E3 of the method, the first communication device 4 displays the predefined message on the first human-machine interface 6 of the first vehicle 1, together with a confirmation request to the first driver, who can either confirm or refuse the transmission of the message, for instance by tapping on corresponding areas displayed on the first human machine interface 6.

If the first driver refuses the transmission of the predefined message, the method ends. If the first driver confirms the transmission of the predefined message, then the first communication device 4 transmits the message (step E4) to the second vehicle 2 (more precisely here, to the second communication device 5) via the first wireless communication interface 9. The transmission is performed through the cellular communication channel C1 or via the short-range communication channel C2. In embodiments where the convoy comprises more than two vehicles, the messages may be transmitted to all the other vehicles of the convoy. In such case, each other vehicle is, from the first vehicle point of view, a "second vehicle" as described above.

The predefined message is then received by the second communication device 5 which, during a step E5 of the method, displays the predefined message on the second human-machine interface 13.

The above-described method advantageously applies to a large plurality of use cases.

In a use case of the above-described method, the event is detected based on location data, for instance provided by the satellite navigation systems. For instance, the detected event is that, the second vehicle being ahead of the first vehicle 1, the distance between the first vehicle 1 and the second vehicle 2 exceeds a predetermined threshold. In other words, the second vehicle 2 is too far ahead from the first vehicle 1.

The predefined message associated with this event in the first memory 7 is for instance "Please drive slower".

Then, the first communication device 4 displays the predefined message together with a request to confirm or refuse the transmission of the message to the second vehicle 2. For instance, the following text is displayed on the first human-machine interface 6: "Do you want to send the following message: 'Please drive slower' " . The first driver may accept or refuse the transmission of the message by pressing the corresponding tactile area of the first human-machine interface 6.

If the first driver confirms transmission of the predefined message, then the predefined message is transmitted to the second communication device 5, which displays it on the second human-machine interface 13.

The second driver can therefore read the message and adapt the speed of the second vehicle 2 accordingly.

In another embodiment of this use case, several predefined messages are associated to the event, for instance the three following messages: "Please slow down" ; "We know the way" and "Please stop". The first communication device displays the three messages on the first human-machine interface 6 with a request for a selection of the message to be sent, for instance: "Do you want to transmit one of the following messages". The first driver can then select one of the predefined messages to be transmitted or refuse the transmission via the first human machine interface.

In another use case, the event is also detected based on location data, for instance provided by the global navigation satellite system. For instance, the detecting event is the overtaking of the first vehicle 1 by the second vehicle 2.

For instance, the predefined message associated to this event is "Do you want to take the lead?".

Here, the following text is displayed on the first human-machine interface 6: "Do you want to send the following message: 'Do you want to take the lead?' ". The first driver may accept or refuse the transmission of the message by pressing the corresponding tactile area of the first human-machine interface 6.

If the first driver confirms transmission of the predefined message, then the predefined message is transmitted to the second communication device 5, which displays it on the second human-machine interface 13.

In this use case, the predefined message offers an option to the second driver, who can confirm or decline the suggestion. If the second driver refuses to take the lead, he selects the corresponding option on the second human machine interface 13. For instance, a message is then displayed on the second human machine interface 13 suggesting the second driver how to adapt its driving behavior in accordance with its choice. The message is for instance "please slow down".

If the second driver wants to take the lead, he selects the corresponding option on the second human machine interface 13.

In both cases, a confirmation message is sent to the first vehicle 1 and displayed on the first human-machine interface 6, to inform the first driver of the choice of the second driver.

In another use-case, the detected event is based on data received by the first wireless communication interface 9. Here, the event is a reception of a message from the second vehicle 2. The message may be a predefined message sent by the second communication device 5 following a detection of an event, or any message sent by the second communication device 5. For instance, the message may be a request to take over the lead of the convoy ("Can I take the lead") or a request for a break ("I need a break").

In response to the detected event, the first communication device 4 selects a corresponding predefined message to be displayed on the first human-machine interface 6. The predefined message may be a concatenation of a predefined message with the received message, for instance "The second vehicle send you the following message 'I need a break' ".

The first driver accepts or refuses the suggestion by selecting the corresponding option on the first human machine interface 6.

A message is then sent to the second vehicle 1 and displayed on the second human-machine interface 6, to inform the second driver of the answer of the first driver.

In another use-case, the detected event is also based on data received by the first wireless communication interface 9. For instance, the data is a SPAT (Signal, Phase and Timing) message emitted by a traffic light. A SPAT message is a message comprising indication of the current and future state of a traffic light (Red, yellow or green). Here, the event is the imminent turning orange of a traffic light towards which the first vehicle 1 is heading. For instance here, the first communication device 4 analyses the SPAT message and, if the remaining time before the traffic light turning orange is less than a predetermined threshold, then the first communication device 4 selects a predefined corresponding message.

For instance, the predefined message is "Traffic light, stay close".

If the first driver accepts the transmission of the predefined message, the message is transmitted to the second communication device 5 and the second driver may adapt his driving behavior.

In another use-case, the detected event is based on signal received from a sensor of the first vehicle. For instance, the signal is representative of a technical issue, for instance a low fuel level (below a predetermined threshold) in the fuel tank of the first vehicle 1, or a low pressure (below a predetermined threshold) in a tire of the first vehicle 1.

In such case, the predefined message is "I need to refuel " or, or "I need a technical break".

In cases where the convoy 3 comprises more than two vehicles, the first vehicle 1 may transmit a same message to several vehicles of the convoy 3. Such a message is for instance a suggestion or a question, for instance a suggestion to take a break. The drivers of the convoy will therefore see the suggestion displayed on the human-machine interface of their respective vehicle, and be invited to select an answer (for instance accept or refuse). Each driver selects an answer, and each selected answer is transmitted to the first vehicle.

Here, the first communication interface 4 is configured to count the different answers and to display a predefined message on the first human-machine interface 6 depending on the majority answer. For instance, if a majority of driver has refused to take a brake, the predefined message is "the break has been refused". If a majority of driver has accepted to take a break, the predetermined message is "The break has been accepted".

It may happen that a detected event is not relevant for some of the driver of the convoy 3. For instance, the detected event is an obstacle on the road, for instance a damaged car on the side of the road (for instance, detected based on a sensor of the first vehicle, such as a camera). This information is only relevant for the vehicles of the convoy that are behind the first vehicle 1, since the vehicle ahead of the first vehicle 1 has already encountered the obstacle. The first communication device 4 is configured to, in such case, transmit the predefined message only to the vehicle for which the message is relevant, here to the vehicle that are behind the first vehicle 1 (which are determined based on location data provided by the global navigation satellite system).

The invention is not limited to the embodiment described above.

For instance, the communications device 4, 5 described above are configured to send messages in response to a detected event. Nevertheless, the communications devices are also configured to provide the possibility for the driver to select a list of predefined default messages from the human machine interface without the detection of an event. For instance, the default messages may have been predetermined by the driver before travelling, via the human-machine interface.

In the above-described use-cases, the messages are transmitted after confirmation from the driver, through the human-machine interface. This feature does not exclude the possibility for communication devices to also transmit messages automatically, without confirmation from the driver.

It has been described human-machine interfaces being touch screen configured to display the messages as text. The invention is also compatible with other types of human-machine interface, for instance a human-machine interface comprising an audio system comprising speakers, microphones, and a speech synthesis and recognition module. In such embodiment, the messages may be read to the driver, and the driver may control the communication device with vocal commands.

The invention is not limited to the use case described above, and any event and/or any message that can improve driving in convoy is compatible with the invention.

## Claims

1. Communication device for a first automotive vehicle (1) travelling in a convoy (3) with at least a second automotive vehicle (2), comprising a wireless communication interface (9) and configured to :
- detect a predefined event based on a signal from a sensor of the first vehicle (1) or based on location data of the first vehicle(1) or based on data received from the wireless communication interface (9);
- select at least a predefined message corresponding to the detected event;
- display the predefined message on a human-machine interface (6) of the first vehicle in order for a driver of the first vehicle to confirm or refuse the transmission of the message;
- if the transmission of the message is confirmed by the driver of the first vehicle (1), transmit the message to the second vehicle (2) via the wireless communication interface (9).

2. Communication device according to claim 1, configured to, after the detection of the predefined event, select a plurality of predefined messages corresponding to the detected event, display the plurality of predefined messages on the human machine interface (6) of the first vehicle (1) in order for the driver to select one message of the plurality of messages, and transmit the selected message to the second vehicle (2) via the wireless communication interface (9).

3. Communication device according to any one of claims 1 and 2, wherein the predetermined event is chosen among the following events:
- the distance between the first vehicle and the second vehicle exceeds a predetermined threshold;
- the relative position of the first vehicle and the second vehicle along the road changes;
- a message is received from the second vehicle;
- a global navigation satellite system of the first vehicle detects an alternative route for the first vehicle;
- an accident is detected;
- an obstacle is detected on the road;
- a technical issue in the first vehicle is detected.

4. Communication device according to any one of claims 1 to 3, wherein the wireless communication interface (9) is configured to implement vehicle-to-everything communications or cellular communications.

5. Communication device according to any one of claims 1 to 4, wherein the communication device (4) comprises a telematic control unit.

6. Communication device according to any one of claims 1 to 5, configured to, the first vehicle (1) travelling in convoy with a third vehicle, determine the relevance of transmitting the message to the third vehicle and, depending on the result of the determination, to transmit or not transmit the message to the third vehicle.

7. Communication device according to claim 6, wherein the determination of the relevance is based on the relative positions of the first vehicle (1) and the third vehicle.

8. Communication device according to any one of claim 1 to 7, configured to display, on command from the driver of the first vehicle (1), a pre-determined list of messages on the human-machine interface (6) of the first vehicle (1), to allow the driver of the first vehicle (1) to select a message, and to transmit the selected message to the second vehicle (2).

9. A method for communication between a first vehicle (1) and at least a second vehicle (2) travelling in convoy, comprising:
- a step (E1) of detecting a predefined event based on a signal from a sensor of the first vehicle (1) or based on location data of the first vehicle (1) or based on data received from the wireless communication interface (9);
- a step (E2) of selecting a predefined message corresponding to the detected event;
- a step (E3) of displaying the predefined message on a human-machine interface (6) of the first vehicle in order for a driver of the first vehicle (1) to confirm or disregard the message;
- if the message is confirmed by the driver, a step (E4) of transmitting the message to the second vehicle (2) via the wireless communication interface (9).

10. Method according to claim 9, comprising a step (5) of displaying said message on a human-machine interface of the second vehicle (2), said message comprising an option to be selected by a driver of the at least one second vehicle (2).
